(19)

**Europäisches Patentamt**

**European Patent Office**

**Office européen des brevets**

(11) **EP 2 365 728 A1**

(12) **EUROPEAN PATENT APPLICATION**

(43) Date of publication:
**14.09.2011 Bulletin 2011/37**

(51) Int Cl.:
**H05B 3/74** (2006.01)

(21) Application number: **11153528.2**

(22) Date of filing: **07.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.03.2010 JP 2010054248**

(71) Applicant: **Omron Corporation**
**Kyoto-shi, Kyoto 600-8530 (JP)**

(72) Inventor: **Egi, Mamoru**
**Kyoto 600-8530 (JP)**

(74) Representative: **Horn Kleimann Waitzhofer**
**Elsenheimerstrasse 65**
**80687 München (DE)**

(54) **Temperature control system and temperature control method**

(57) In a temperature control system, a plurality of heaters arranged in a plurality of rows and columns on a heat plate, heaters in the same row are connected to a common wiring, and heaters in the same columns are connected to a common wiring. The wirings of the rows are connected to the side of one pole of an AC power source via switching elements, respectively. The wirings of the columns are connected to the side of the other pole of the AC power source via switching elements, respectively. Firing pulse output (firing instruction) is output to a target heater by optimal cycle control with a controller. When updating an accumulated output error in the optimal cycle control of the target heater, an interference operation amount is subtracted from the accumulated output error.

FIG. 3

**EP 2 365 728 A1**

**Description**

BACKGROUND OF THE INVENTION

1. TECHNICAL FIELD

The present invention relates to a temperature control system and method in which a plurality of heaters that are arranged in a plurality of rows and columns and connected to each other by wirings are provided with respect to a heat plate on which a heated object is placed so as to be subjected to heat processing. More specifically, the present invention relates to a temperature control system as described above which can prevent a situation in which a driving current to a targeted heater flows into other heaters via wirings as leakage current and heat is generated in the other heaters, and the generated heat interferes with temperature control of the target heater.

2. RELATED ART

Conventionally, for example, in temperature control in which a heated object is placed on a heat plate so as to be subjected to heat processing, a temperature controller controls the current flow through heaters disposed in the heat plate such that the temperature of the heat plate becomes a set temperature based on the detected temperature detected by a temperature sensor disposed on the heat plate (see Patent Document 1).

In such a temperature control system, when the heat plate area is divided into areas in a plurality of rows and columns, and a heater and a temperature sensor are disposed in each area, thereby performing temperature control of the heat plate individually for each area, the number of wirings of the heaters and the signal lines of the temperature sensors increases.

In view of this, in Japanese Patent Application No. 2008-332717 (filed on December 26, 2008), the inventors of the present invention have provided a temperature control system in which a heat plate is divided into a plurality of areas in the row/column directions and a heater and a temperature sensor are disposed in each area with simplified wirings.

Related Art Documents

[Patent Documents]

[Patent Document 1] Japanese Unexamined Patent Publication No. 2001-274069

The above-described temperature control system provided by the inventors of the present invention adopts a configuration in which in a plurality of heaters arranged in a plurality of rows and columns on the heat plate, heaters in the same row are connected by a common wiring, heaters in the same column are connected by a common wiring, and further the wirings of the rows are connected to one pole of an AC power source via respective switching elements, and the wirings of the columns are connected to the other pole of an AC power source via respective switching elements, thereby enabling simplifying wirings when using a plurality of heaters.

However, when driving current is applied to the wirings of the row and column corresponding to a target heater to be controlled out of a plurality of heaters arranged in a plurality of rows and columns on the heat plate, part of the driving current flows into other heaters via the wirings. Consequently, in addition to the target heater being driven to generate heat, a plurality of other heaters are also driven to generate heat, thereby causing electric interference with temperature control of the control target heater. As a result, the temperature control of the entire heat plate is affected.

SUMMARY

In view of the above issues, an object of the present invention is, in a temperature control system in which a plurality of heaters are arranged in a plurality of rows and columns on a heat plate serving as an example of a control target, and driving of such heaters are controlled while simplifying the wirings thereof, to enable suppressing electric interference (interference operation amount) due to the leakage current to the heaters to a smallest-possible level in a state in which driving current to a heater also flows into other heaters as leakage current.

The present invention provides a temperature control system including a plurality of heaters arranged on a control target in a plurality of rows and columns, heaters of the same row being connected to a common wiring and heaters of the same column being connected to a common wiring, wirings of the rows being connected to the side of one pole of a power source via respective elements that respond to a heater firing instruction, and wirings of the columns being connected to the side of the other pole of the power source via respective elements that respond to a heater firing instruction, and a controller that controls driving of the plurality of heaters based on an operation amount that is input for controlling a temperature of the control target, wherein the controller includes an output error accumulation unit that, for each heater, at least every half cycle of the power source, calculates an output error based on the operation amount input and a threshold that has been set in advance for allowing driving of the heater based on the operation amount input, and also that accumulates (e.g. adds up) calculated output errors, a determination unit that determines whether the accumulated output error is equal to or larger than the threshold, and an output control unit that outputs a heater firing instruction to a corresponding element based on the determination result by the determination unit, and wherein the output error accumulation unit, when updating the accumulated output error, subtracts, from the updated accumulated output error, an interference operation amount to which the respective heater is subjected due to current flowing through other heaters via the wirings of the heaters. The operation amount may be input to control a temperature of the control target. Moreover, the output error accumulation unit may calculate the output error by calculating the difference between the operation amount and an actual output value. The actual output value may be obtained by the controller by comparing an input value with the predetermined threshold, and setting the actual output value to a first actual output value when the input value is equal to or larger than the threshold and setting the actual output value to a second actual output value when the input value is smaller than the threshold. The controller may obtain the input value by adding the input operation amount and the accumulated output error.

The power source is not limited to an AC power source.

Preferably, with the temperature control system of the present invention, the controller further includes an interference operation amount calculation unit that calculates the interference operation amount using relation information indicating an extent of interference to which each heater is subjected due to current flowing through other heaters via the wirings of the heaters.

Preferably, with the temperature control system of the present invention, the controller further includes a largest output error heater selection unit that selects a heater whose accumulated output error is largest by referring to the output error accumulation unit, and a smallest interference heater selection unit that selects a heater having a smallest interference operation amount obtained by the interference operation amount calculation unit, the determination unit determines with respect to the selected heater having the largest accumulated output error whether the accumulated output error is equal to or larger than the threshold, if the accumulated output error is determined to be equal to or larger than the threshold, then the output control unit further determines whether power consumption of the selected heater is smaller than a power limit, and if the power consumption is determined to be smaller than the power limit, outputs a heater firing instruction to an element corresponding to the selected heater, the determination unit then determines whether the accumulated output error is equal to or larger than the threshold with respect to a heater selected by the smallest interference heater selection unit from among heaters that have not been selected by the largest output error heater selection unit, and if the accumulated output error is determined to be equal to or larger than the threshold, the output control unit further determines whether power consumption of the selected heater is smaller than the power limit, and if the power consumption is determined to be smaller than the power limit, the determination unit and the output control unit repeatedly perform, with respect to heaters that have not been selected at the time of this determination, the operation performed on the heater selected by the smallest interference heater selection unit, and output a heater firing instruction to an element corresponding to a heater selected as a result of the repeatedly performed operation.

More preferably, with the temperature control system of the present invention, after the output control unit has output the heater firing instruction to the element corresponding to the selected heater having the largest accumulated output error, the smallest interference heater selection unit selects a heater having the smallest interference operation amount from among heaters in the same row or column as the heater having the largest accumulated output error.

More preferably, with the temperature control system of the present invention, the interference operation amount calculation unit calculates the interference operation amount based on a maximum heater current that flows at the time of turning on an element corresponding to any of the plurality of heaters, target heater current of each of the plurality of heaters, and each heater current calculated by using the relation information of the heaters.

The present invention also provides a method for driving of a plurality of heaters for controlling a temperature of a control target where the plurality of heaters are arranged on the control target in a plurality of rows and columns. The heaters of the same row are connected to a common wiring and the heaters of the same column are connected to a common wiring. The wirings of the rows are connected to the side of one pole of a power source via respective elements that respond to a heater firing instruction, and the wirings of the columns are connected to the side of the other pole of the power source via respective elements that respond to a heater firing instruction.

The method includes the steps of inputting an operation amount that is input for controlling a temperature of the control target, calculating, for each heater, at least every half cycle of the power source, an output error based on the operation amount input and a threshold that has been set in advance for allowing driving of the heater based on the operation amount input, and also accumulating calculated output errors, determining whether the accumulated output error is equal to or larger than the threshold, outputting a heater firing instruction to a corresponding element based on a determination result, and updating the accumulated output error by subtracting from the updated accumulated output error, an interference operation amount to which the respective heater is subjected due to current flowing through other heaters via the wirings of the heaters.

According to the present invention, in a case where optimal cycle control is performed on a temperature control system which enables to simplify wirings by arranging a plurality of heaters in the row/column directions on a control target, when updating the accumulated output error in the optimal cycle control in each heater, the interference operation amount due to leakage current to other heaters is subtracted from the updated value of the accumulated output error. Therefore, optimal cycle control can be performed on the heaters while suppressing the interference operation amount, so as to take advantage of simplified wirings of the temperature control system.

BRIEF DESCRIPTION OF THE DRAWINGS

Fig. 1 is a diagram illustrating a schematic configuration of an entire temperature control system according to an embodiment of the present invention;
Fig. 2 is a diagram illustrating a detailed configuration of an optimal cycle control unit shown in Fig. 1;
Fig. 3 is a flowchart illustrating an operation of the optimal cycle control;
Fig. 4 is a diagram illustrating calculation of the ratio of leakage current to other heaters relative to heater driving current to a heater 8-11, an expected output current value, and an interference operation amount $MVI_{i,j}(n)$;
Fig. 5 is a diagram illustrating calculation of the ratio of leakage current to other heaters relative to heater driving current to heaters 8-11 and 8-32, an expected output current value and an interference operation amount $MVI_{i,j}(n)$;
Fig. 6 is a flowchart for selecting heaters from heaters $8_{i,j}$ having little electric interference;
Fig. 7 is a flowchart for selecting heaters from heaters $8_{i,j}$ in the same row and the same column; and
Fig. 8 is a simpler flowchart for selecting heaters from heaters $8_{i,j}$ in the same row and the same column.

DETAILED DESCRIPTION

Hereinafter, a temperature control system according to an embodiment of the present invention will be described with reference to the attached drawings.

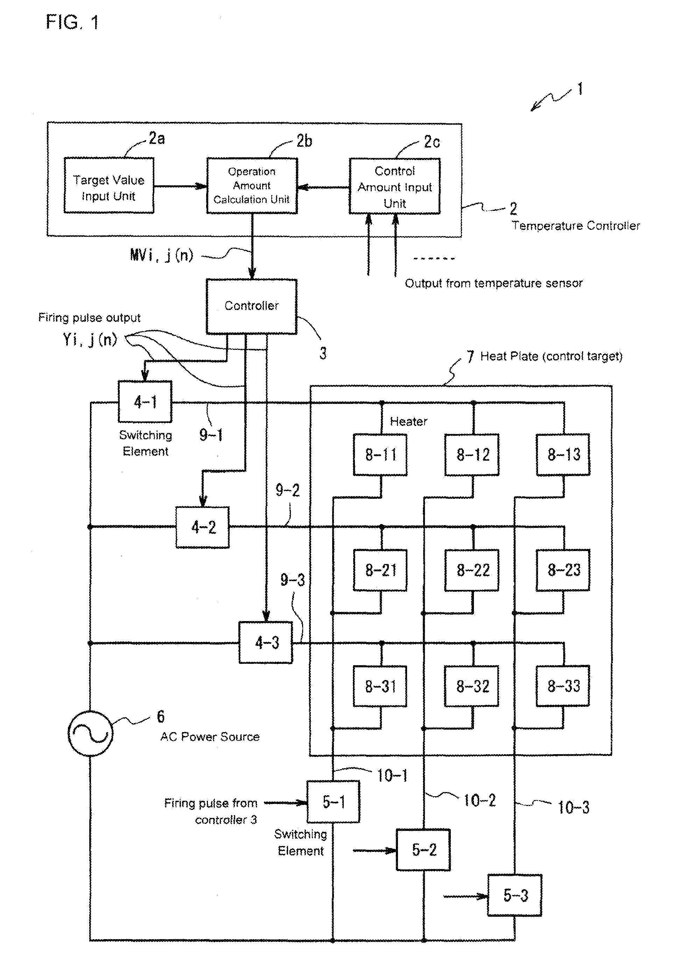

Fig. 1 shows the schematic configuration of a temperature control system and the wiring structure of a plurality of heaters disposed on a heat plate serving as a control target. In Fig. 1, reference numeral 1 denotes an entire temperature control system, reference numeral 2 denotes a temperature controller, reference numeral 3 denotes a controller, reference numerals 4-1, 4-2 and 4-3 ($4_i$ in generalized form) denote switching elements (SSRs with zero cross function) in each row in the row direction, reference numerals 5-1, 5-2 and 5-3 ($5_j$ in generalized form) denote switching elements (SSRs with zero cross function) in each column in the column direction, reference numeral 6 denotes an AC power source, reference numeral 7 denotes a heat plate having a rectangular shape in a top view, serving as an example of the control target, reference numerals 8-11 to 8-33 ($8_{i,j}$ in generalized form) indicate heaters arranged in each of the areas obtained by dividing the heat plate 7 into areas in a plurality of rows and columns. A temperature sensor not shown in Fig. 1 is also arranged in each of the divided areas.

The temperature controller 2 includes target value input unit 2a, operation amount calculation unit 2b, and control amount input unit 2c. The target value input unit 2a inputs a target value to the operation amount calculation unit 2b. The control amount input unit 2c inputs, to the operation amount calculation unit 2b, detected temperatures from a plurality of temperature sensors 11-11 to 11-33 ($11_{i,j}$ in generalized form) arranged in a plurality of rows and columns on the heat plate 7 as described above as a control amount. The operation amount calculation unit 2b calculates an operation amount $MV_{i,j}(n)$ for each of the heaters $8_{i,j}$ based on the target values and the control amounts, and inputs the calculated operation amounts $MV_{i,j}(n)$ to the controller 3.

The controller 3 can apply power of the AC power source 6 to the heaters $8_{i,j}$ to drive the same, by so-called optimal cycle control in which, with respect to the heaters $8_{i,j}$ of the respective rows and columns, a heater firing instruction is given to the switching elements $4_i$, $5_j$ every half cycle of the AC power source 6 depending on the respective operation amounts $MV_{i,j}(n)$ that have been input, thereby turning the switching elements $4_i$, $5_j$ on or off to control whether or not the switching elements $4_i$, $5_j$ output a heater firing pulse.

In the row direction, the heaters 8-11, 8-12 and 8-13 of the first row are connected to a first-row wiring 9-1, the heaters 8-21, 8-22 and 8-23 of the second row are connected to a second-row wiring 9-2, and the heaters 8-31, 8-32 and 8-33 of the third row are connected to a third-row wiring 9-3, and the row wirings 9-1 to 9-3 are connected to one pole of the AC power source 6 via the respective switching elements 4-1, 4-2 and 4-3.

In the column direction, the heaters 8-11, 8-21 and 8-31 of the first column are connected to a first-column wiring 10-1, the heaters 8-12, 8-22 and 8-32 of the second column are connected to a second-column wiring 10-2, and the heaters 8-13, 8-23 and 8-33 of the third column are connected to a third-column wiring 10-3, and the column wirings 10-1 to 10-3 are connected to the other pole of the AC power source 6 via the respective switching elements 5-1, 5-2 and 5-3.

In other words, the heaters 8i,j in the rows and columns are connected to the AC power source 6 by the row wirings 9i and the column wirings 10j, via the switching elements 4i of the rows and switching elements 5j of the columns. Accordingly, by outputting and applying a firing pulse output Yi,j(n) to the switching elements 4i, 5j of the rows and columns in order to selectively turn on/off the switching elements 4i, 5j, it is possible to apply power from the AC power source 6 to the target heaters 8i,j in the temperature control target area of the heat plate 7, thereby selectively driving the target heaters 8i,j.

The controller 3 can selectively drive the switching elements 4i, 5j by outputting the firing pulse output Yi,j(n) to the switching elements 4i, 5j.

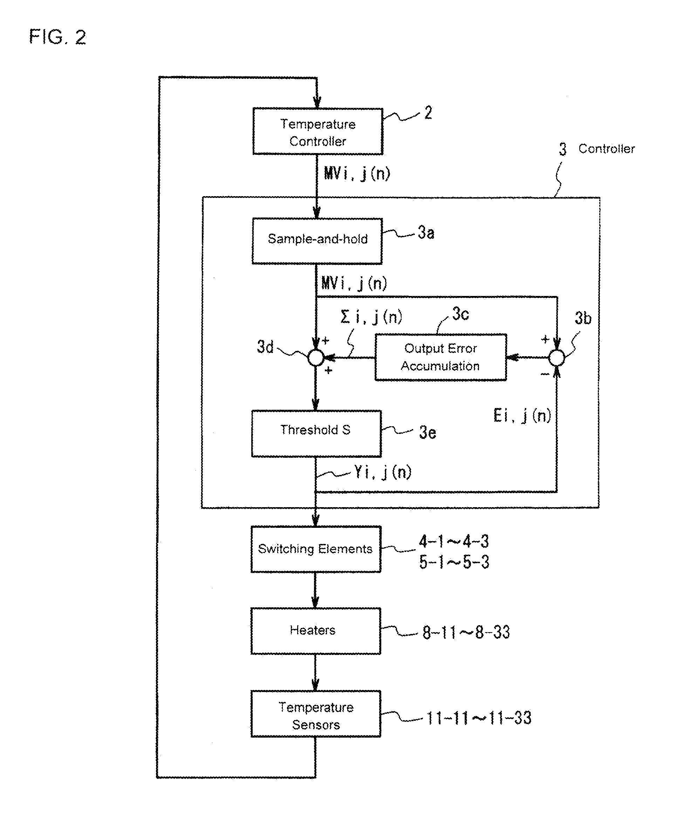

Optimal cycle control by the controller 3 will be described with reference to Fig. 2. Fig. 2 shows the temperature controller 2, the controller 3, the switching elements 4i, 5j, the heaters 8i,j, and the temperature sensors 11 i,j. The controller 3 includes a sample-and-hold unit 3a that holds an operation amount MVi,j(n) from the operation amount calculation unit 2b of the temperature controller 2 during a half cycle of the AC power source, an output error computing unit 3b that calculates an output error Ei,j(n) between the operation amount MVi,j(n) and the actual output value Yi,j(n) (switching element drive output), an output error accumulating unit 3c that accumulates output errors Ei,j(n) obtained by the output error computing unit 3b, an adding (correcting) unit 3d that adds the input operation amount MVi,j(n) and an accumulated output error Σi,j(n) and a comparison unit 3e that receives an input of output Yi,j(n) from the adding unit 3d, compares the input value Yi,j(n) with a predetermined threshold S, and outputs 100% when the input value Yi,j(n) is equal to or larger than the threshold S and outputs 0% when the input value Yi,j(n) is smaller than the threshold S.

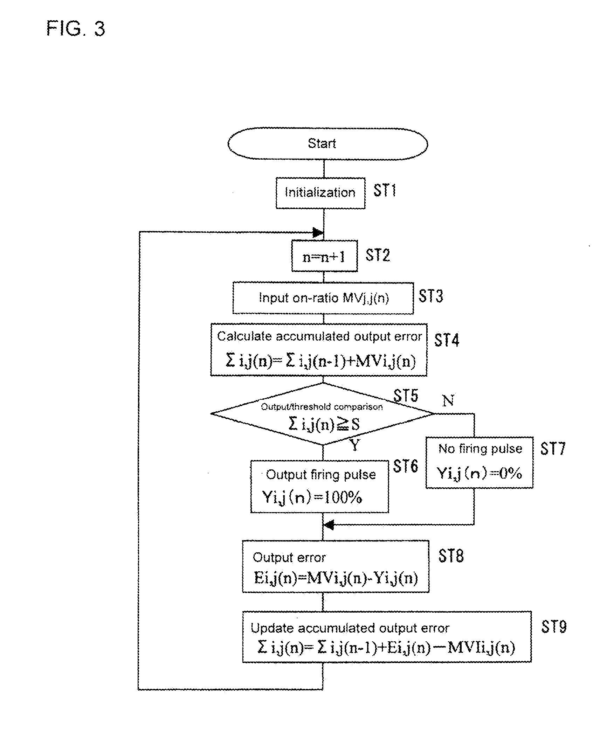

Operation of the controller 3 will be described with reference to the flowchart in Fig. 3. The flowchart applies to each heater 8i,j (heaters 8-11, 8-12, 8-13, 8-21, 8-22, 8-23, 8-31, 8-32 and 8-33). Upon starting an operation with step ST1, an initialization is performed. Following the initialization, a variable n is incremented by 1 in step ST2. When processing is started, n is set to 1. In step ST3, the adding unit 3d acquires from the sample-and-hold unit 3a the operation amount MVi,j(n), which is the first (n=1) on-ratio input. The operation amount MVi,j(n) is the operation amount of the heater 8i,j. In step ST4, the adding unit 3d adds, to the accumulated output error Σi,j(n-1) from the output error accumulating unit 3c of the heater 8i,j up to the previous iteration, the current operation amount MVi,j(n) of the respective heater 8i,j acquired from the sample-and-hold unit 3a, thereby obtaining the current accumulated output error Σi,j(n) = Σi,j(n-1) + MVi,j(n) for the respective heater 8i,j.

In step ST5, the comparison unit 3e receives from the adding unit 3d an input of the accumulated output error Σi,j(n) of the respective heater 8i,j, and compares the accumulated output error Σi,j(n) with the threshold S.

As a result of the comparison, for those heaters 8i,j whose accumulated output error Σi,j(n) is equal to or larger than the threshold S, the firing pulse output Yi,j(n) is set to 100% in step ST6. By contrast, for those heaters 8i,j whose accumulated output error Σi,j(n) is smaller than the threshold S, the firing pulse output Yi,j(n) is set to 0% (which means turning off the switching element to stop driving the heater) in step ST7, so that those heaters are not turned on.

In step ST8, the output error computing unit 3b obtains a deviation between the current operation amount MVi,j(n) from the sample-and-hold unit 3a and the firing pulse output Yi,j(n) from the comparison unit 3e as an output error Ei,j(n) (= MVi,j(n) - Yi,j(n)) of the respective heater 8i,j. The output error Ei,j(n) is output to the output error accumulating unit 3c. In step ST9, the output error accumulating unit 3c adds the current output error Ei,j(n) to the accumulated output error Σi,j(n-1) up to the previous iteration, and subtracts an absolute value of an interference operation amount MVIi,j(n) to be described later from the added result, thereby updating the accumulated output error Σi,j(n-1). In this manner, processing of the first half cycle of the heaters 8i,j ends.

Accordingly, the controller 3 comprises, or functions, as an output error accumulation unit, a determination unit and an output control unit. The output error accumulation unit calculates, for each heater, an output error based on the operation amount input and a threshold that has been set in advance for allowing driving of the heater based on the operation amount input, and also that accumulates calculated output errors. The determination unit determines whether the accumulated output error is equal to or larger than the threshold. And the output control unit that outputs a heater firing instruction to a corresponding element based on the determination result by the determination unit.

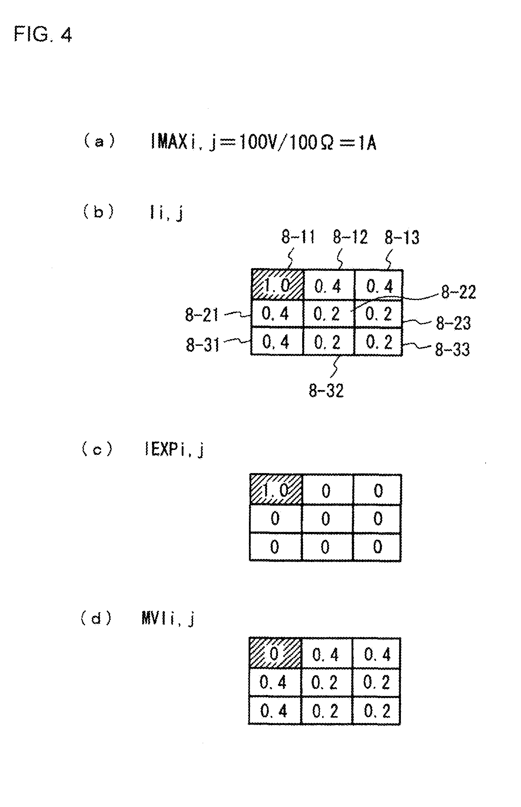

Calculation of the interference operation amount MVIi,j(n) of each heater 8i,j will be described with reference to Fig. 4. The heaters 8i,j are arranged on the heat plate 7 in three rows in the i (row) direction and three columns in the j (column) direction (in a matrix), for example. When driving current is applied for example to the heater 8-11, leakage current flows into other heaters 8-12, etc., and this leakage current causes mutual electric interference among the heaters 8i,j. In the present embodiment, the term "interference operation amount" is used in order to express the extent of the electric interference quantitatively.

The interference operation amount MVIi,j(n) of the heaters 8i,j will be described below. When IMAXi,j is taken as a maximum heater current when the operation amount MVi,j(n) is input to the heaters 8i,j at 100%, Ii,j is taken as the current flowing through the heaters 8i,j in the rows and columns, and IEXPi,j is taken as the target heater current of the heaters 8i,j, then the interference operation amount MVIi,j(n) is obtained by the following equation (1).

$$MVI_{i,j}(n) = | (I_{i,j} - IEXP_{i,j}) / IMAX_{i,j} | \qquad (1)$$

With the equation (1), the interference operation amount MVIi,j(n) of each of the heaters 8i,j can be determined.

For example, a case in which the heater 8-11 of the first row and first column is turned on will be described with reference to Fig. 4. In Fig. 4, the flowchart shown in Fig. 3 is carried out for each of the heaters 8i,j to obtain their respective accumulated output errors $\Sigma$i,j(n-1), and the interference operation amount MVIi,j(n) is subtracted when updating the accumulated output error $\Sigma$i,j(n-1).

Specifically, as shown in Fig. 4A, when the power source voltage of the AC power source 6 is 100V and the resistance of the heaters 8i,j is 100 $\Omega$, for example, then the maximum heater current IMAXi,j flowing through the heater 8i,j is 1(A).

When the switching elements 4-1 and 5-1 are turned on to select the heater 8-11 and heater current I11 is applied to the heater 8-11, leakage currents I12, I13 etc. flow through other heaters 8-12, 8-13 etc. That is, according to Kirchhoff's law, the heater currents Ii,j are as shown in Fig. 4B, namely the heater current I11 of the heater 8-11 is 1.0(A), the heater current I12 of the heater 8-12 is 0.4(A), the heater current I13 of the heater 8-13 is 0.4(A), the heater current I21 of the heater 8-21 is 0.4(A). The heater currents that flow through the other heaters are as shown in Fig. 4B.

The target heater current IEXPi,j of the heaters 8-11, 8-12, 8-13, 8-21, 8-22, 8-23, 8-31, 8-32 and 8-33 is as shown in Fig. 4C. Specifically, the target heater current IEXPi,j of the heater 8-11 is 1.0, and that of other heaters 8-12, 8-13, 8-21, 8-22, 8-23, 8-31, 8-32 and 8-33 is 0.

The interference operation amounts MVIi,j(n) can be obtained as shown in Fig. 4D by substituting the above values into the above equation (1). The interference operation amounts MVIi,j(n) of the heaters 8-11, 8-12, 8-13, 8-21, 8-22, 8-23, 8-31, 8-32 and 8-33 are 0, 0.4, 0.4, 0.4, 0.2, 0.2, 0.4, 0.2 and 0.2, respectively.

When updating the accumulated output error $\Sigma$i,j(n-1) in step ST9 in Fig. 3, the respective interference operation amount MVIi,j(n) is subtracted for each heater 8i,j. Then, processing returns to step ST2, and for those heaters 8i,j whose accumulated output error $\Sigma$i,j(n-1) is equal to or larger than the threshold S in the output/threshold comparison in step ST5, a firing pulse is output to turn on that heater 8i,j, and for those heaters 8i,j whose accumulated output error $\Sigma$i,j(n-1) is smaller than the threshold S, no firing pulse is output (not turning on).

In this manner, the interference operation amount MVIi,j(n) is subtracted for each heater 8i,j in step ST9 to update the accumulated output error $\Sigma$i,j(n), and then processing returns to step ST2. The operation amount MVi,j is input and the accumulated output error $\Sigma$i,j(n) is calculated. If the accumulated output error $\Sigma$i,j(n) is equal to or larger than the threshold S in the output/threshold comparison, a firing pulse output Yi,j(n) is output and when it is smaller than the threshold S, then no firing pulse output Yi,j(n) is output. Turning on/off of the heaters 8i,j on the heat plate 7 is carried out by repeating the flowchart in Fig. 3 in which the interference operation amount MVIi,j(n) is subtracted in step ST9 in this manner, thereby enabling temperature control while suppressing electric interference from other heaters 8i,j.

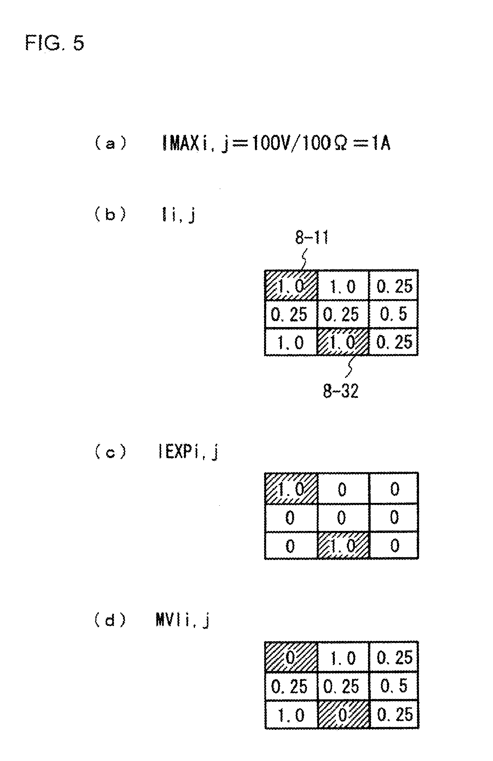

A case in which two or more heaters 8i,j, namely heaters 8-11 and 8-32, are turned on will be described with reference to Fig. 5. As shown in Fig. 5A, the maximum heater current IMAXi,j of each heater 8i,j is determined. Next, when the heater currents Ii,j flowing through the heaters 8i,j (heaters 8-11, 8-12, 8-13, 8-21, 8-22, 8-23, 8-31, 8-32 and 8-33) are determined, they are as shown in Fig. 5B according to Kirchhoff's law. That is, the heater current Ii,j of the heaters 8-11, 8-12, 8-31 and 8-32 is 1.0, that of the heaters 8-13, 8-21, 8-22, 8-33 is 0.25, and that of the heater 8-23 is 0.5. The target heater currents IEXPi,j of the heaters 8-11, 8-12, 8-13, 8-21, 8-22, 8-23, 8-31, 8-32 and 8-33 are 1.0, 0, 0, 0, 0, 0, 1.0 and 0, respectively, as shown in Fig. 5C. Accordingly, the interference operation amounts MVIi,j(n) of the heaters 8-11, 8-12, 8-13, 8-21, 8-22, 8-23, 8-31, 8-32 and 8-33 are 0, 1, 0.25, 0.25, 0.25, 0.5, 1, 0, and 0.25, respectively.

Then, in step ST9 of the flowchart in Fig. 3, the interference operation amounts MVIi,j(n) are subtracted from the respective updated accumulated output errors $\Sigma$i,j(n-1) of the heaters 8-11, 8-12, 8-13, 8-21, 8-22, 8-23, 8-31, 8-32 and 8-33, and processing returns to step ST2. For heaters 8i,j whose accumulated output error $\Sigma$i,j(n-1) is equal to or larger than the threshold S in the output/threshold comparison in step ST5, a firing pulse is output, and for heaters 8i,j whose accumulated output error $\Sigma$i,j(n-1) is smaller than the threshold S, no firing pulse is output.

That is, for each heater 8i,j, the flowchart in Fig. 3 is performed and the interference operation amount MVIi,j(n) is subtracted from the accumulated output error $\Sigma$i,j(n-1) in step ST9.

In this manner, also in the flowchart in Fig. 3, the interference operation amount MVIi,j(n) is subtracted for each heater 8i,j in step ST9 to update the accumulated output error $\Sigma$i,j(n), and the processing returns to step ST2. The operation amount MVi,j is input and the accumulated output error $\Sigma$i,j(n) is calculated. When the accumulated output error $\Sigma$i,j(n) is equal to or larger than the threshold S in the output/threshold comparison, a firing pulse output Yi,j(n) is output and when it is smaller than the threshold S, no firing pulse output Yi,j(n) is output. Turning on/off of the heaters 8i,j on the heat plate 7 is carried out by repeating the flowchart in Fig. 3 in which the interference operation amount MVIi, j(n) is subtracted in step ST9 in this manner, thereby enabling temperature control while suppressing electric interference from other heaters 8i,j.

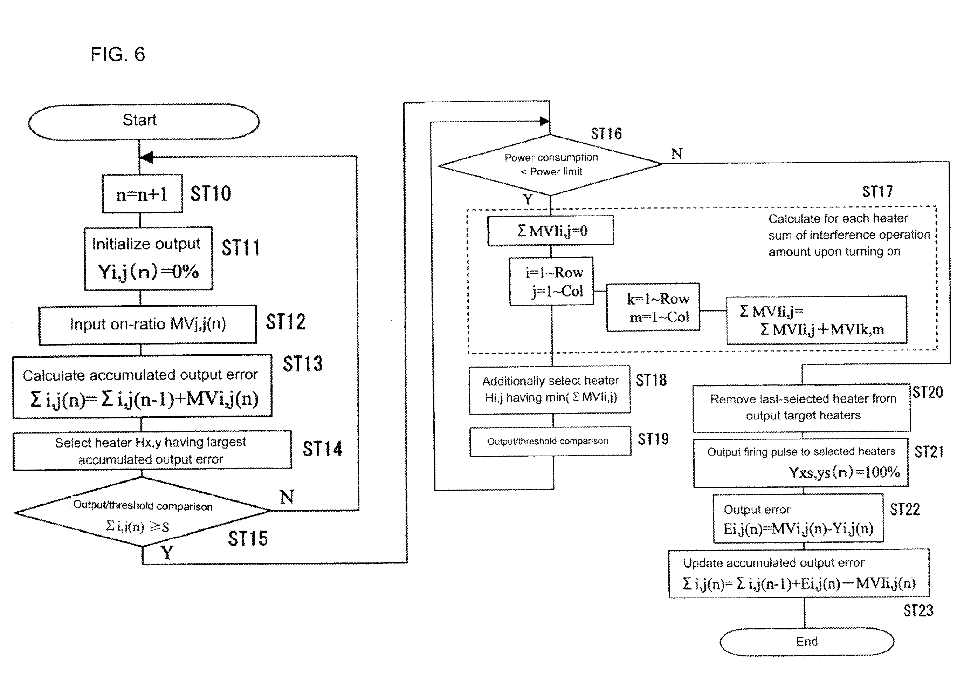

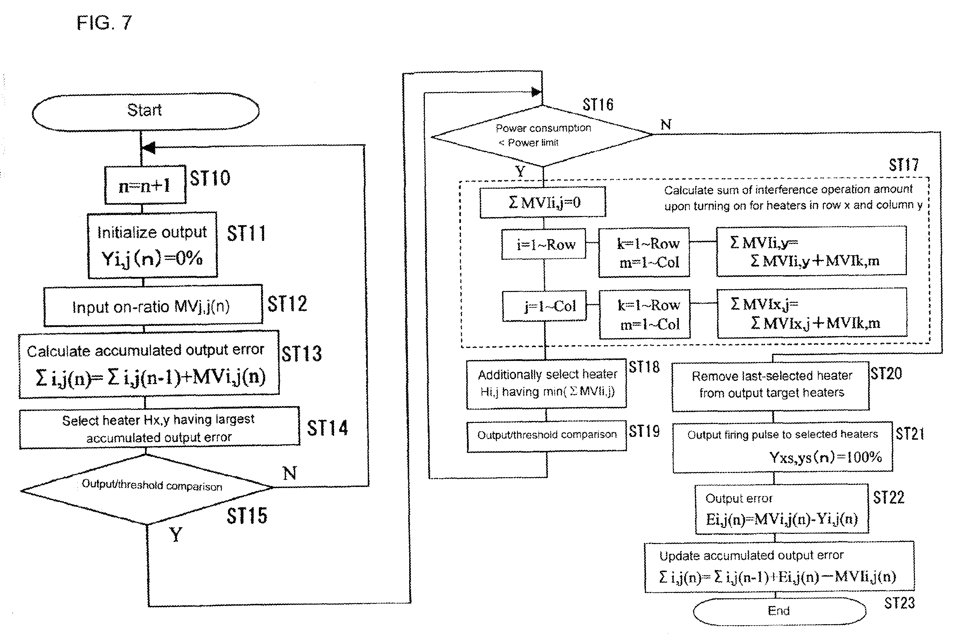

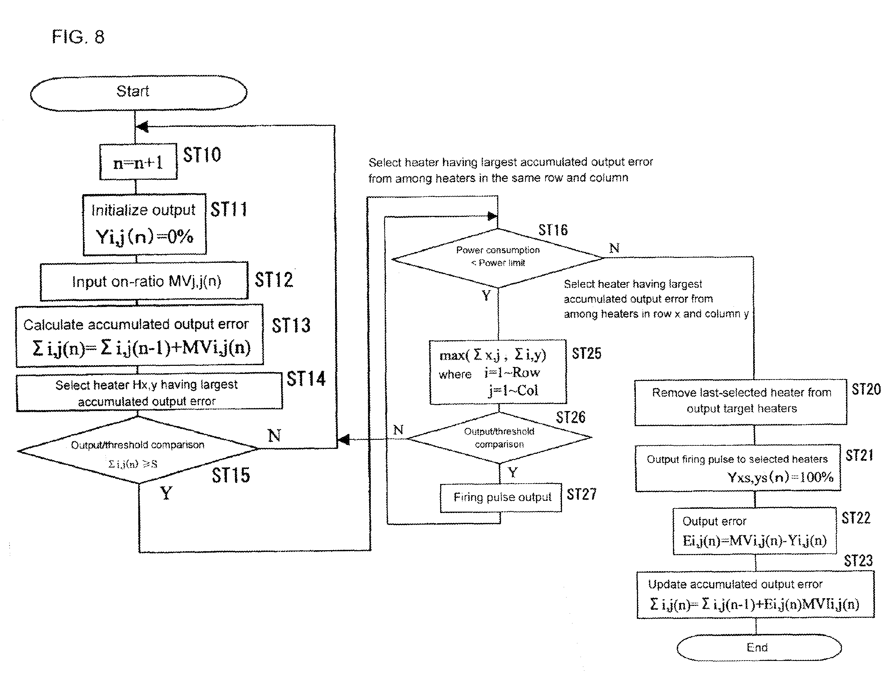

With respect to the flowchart in Fig. 3, Figs. 6 to 8 each show flowcharts in which a heater 8i,j having the largest accumulated output error is selected and the output error thereof is resolved, then it is determined whether a condition that power consumption is smaller than a power limit is satisfied, and thereafter, the processing proceeds to the following step. In Fig. 6, a flowchart is illustrated in which a heater is selected from heaters 8i,j having a small interference operation amount MVIi,j(n). In Fig. 7, a flowchart is illustrated in which heaters 8i,j are selected from the same row and column, thereby eliminating a burden to calculate interference operation amount MVIi,j(n) for all the heaters 8i,j. In Fig. 8, a flowchart is illustrated in which heaters 8i,j are selected from the same row and column, thereby making the leakage current smaller than that in the case where heaters 8i,j are selected from completely different rows and columns.

Initially, the flowchart in Fig. 6 will be described. In step ST10, the variable n is incremented by 1. When processing is started, n is set to 1. In step ST11, the output Yi,j(n) is initialized (set to 0%). In step ST12, the operation amount MVi,j(n) is acquired. In step ST13, accumulated output error $\Sigma i,j(n) = \Sigma i,j(n-1) + MVi,j(n)$ is calculated. In step ST14, a heater 8i,j having the largest accumulated output error $\Sigma i,j(n)$ is selected.

In step ST15, the largest accumulated output error $\Sigma i,j(n)$ is compared with the threshold S. If the result of the comparison indicates that the accumulated output error $\Sigma i,j(n)$ is smaller than the threshold S, the processing returns to step ST10, and if the result indicates that the accumulated output error $\Sigma i,j(n)$ is equal to or larger than the threshold S, then it is determined in step ST16 whether the power consumption is smaller than a power limit. If the power consumption of the heater 8i,j is smaller than the power limit, then the processing moves to step ST17 onward.

In step ST17, the interference operation amount MVIi,j(n) for each heater 8i,j, is obtained and their sum is calculated. The calculation of the interference operation amount MVIi,j(n) is described with reference to Figs. 4 and 5, and thus is not further described here.

In step ST18, a heater 8i,j having the smallest interference operation amount MVIi,j(n) is additionally selected, and a comparison is made with the threshold S in step ST19. Then, processing returns to step ST16 and repeats similar processing, thereby additionally selecting the heater 8i,j having the smallest interference operation amount MVIi,j(n). When the power consumption of the heaters 8i,j is finally equal to or larger than the power limit in step ST16, the last-selected heater 8i,j is removed in step ST20 from the heaters 8i,j to be turned on. In step ST21, the firing pulse output Yi,j(n) is output to the selected heaters 8i,j, the output error Ei,j(n) = MVi,j(n) - Yj,j(n) is calculated in step ST22, the accumulated output error $\Sigma i,j(n)$ is updated in step ST23, and processing ends. In step ST23, the interference operation amount MVIi,j(n) is subtracted from the accumulated output error $\Sigma i,j(n-1)$.

In the flowchart in Fig. 7, steps ST10 to ST16 are the same as those in Fig. 6. In step ST17, the sum of the interference operation amount MVIi,j(n) when the heaters 8i,j in the row x and the column y are turned on by outputting the firing pulse is calculated. Step ST18 onward is the same as step ST18 onward of the flowchart in Fig. 6.

In the flowchart in Fig. 8, heaters 8i,j are selected from the same row and column, and processing is further simplified. Steps ST10 to ST16 are the same as those in Fig. 6, and in step ST25 following step ST16, a heater 8i,j having the largest accumulated output error is selected. In step ST26, when the accumulated output error $\Sigma i,j(n)$ is smaller than the threshold S, processing returns to step ST10, and when the accumulated output error $\Sigma i,j(n)$ is equal to or larger than the threshold S, the firing pulse output Yi,j(n) is output in step ST27, and processing returns to step ST16. Then, in step ST16, if the power consumption of the heater 8i,j is equal to or larger than the power limit, steps similar to steps ST20 to ST 23 of the flowchart in Fig. 6 are performed.

As described above, the present embodiment is a temperature control system in which a plurality of heaters 8i,j are arranged in the row/column directions on the heat plate 7 serving as the control target, in which when updating the accumulated output error $\Sigma i,j(n)$ in the optimal cycle control of each heater, the interference operation amount MVIi, j(n) for other heaters is subtracted. Therefore, while taking advantage of simple wirings of the temperature control system, optimal cycle control can be performed while suppressing the interference operation amount MVIi,j(n) in the temperature control of the heaters 8i,j.

Note that the element that responds to the heater firing instruction for turning on the heaters 8i,j is not limited to the stated switching elements 4i, 5j. It is also possible to use a phase-controlled element, such as a power conditioner.

## Claims

1. A temperature control system comprising:

   a plurality of heaters arranged on a control target in a plurality of rows and columns, heaters of the same row being connected to a common wiring and heaters of the same column being connected to a common wiring, wirings of the rows being connectable to the side of one pole of a power source via respective elements that respond to a heater firing instruction, and wirings of the columns being connectable to the side of the other pole of the power source via respective elements that respond to a heater firing instruction; and
a controller that controls driving of the plurality of heaters based on an operation amount,
wherein the controller comprises:

an output error accumulation unit that, for each heater, calculates an output error based on the operation amount input and a threshold that has been set in advance for allowing driving of the heater based on the operation amount input, and also that accumulates calculated output errors;
a determination unit that determines whether the accumulated output error is equal to or larger than the threshold; and
an output control unit that outputs a heater firing instruction to a corresponding element based on the determination result by the determination unit,

wherein the output error accumulation unit, when updating the accumulated output error, subtracts, from the updated accumulated output error, an interference operation amount to which the respective heater is subjected due to current flowing through other heaters via the wirings of the heaters.

2. The temperature control system according to claim 1, wherein the controller further comprises an interference operation amount calculation unit that calculates the interference operation amount using relation information indicating an extent of interference to which each heater is subjected due to current flowing through other heaters via the wirings of the heaters.

3. The temperature control system according to claim 2,
wherein the controller further comprises:

a largest output error heater selection unit that selects a heater whose accumulated output error is largest by referring to the output error accumulation unit; and
a smallest interference heater selection unit that selects a heater having a smallest interference operation amount obtained by the interference operation amount calculation unit,

the determination unit determines with respect to the selected heater having the largest accumulated output error whether the accumulated output error is equal to or larger than the threshold,
if the accumulated output error is determined to be equal to or larger than the threshold, then the output control unit further determines whether power consumption of the selected heater is smaller than a power limit, and if the power consumption is determined to be smaller than the power limit, outputs a heater firing instruction to an element corresponding to the selected heater,
the determination unit then determines whether the accumulated output error is equal to or larger than the threshold with respect to a heater selected by the smallest interference heater selection unit from among heaters that have not been selected by the largest output error heater selection unit, and
if the accumulated output error is determined to be equal to or larger than the threshold, the output control unit further determines whether power consumption of the selected heater is smaller than the power limit, and if the power consumption is determined to be smaller than the power limit, the determination unit and the output control unit repeatedly perform, with respect to heaters that have not been selected at the time of this determination, the operation performed on the heater selected by the smallest interference heater selection unit, and output a heater firing instruction to an element corresponding to a heater selected as a result of the repeatedly performed operation.

4. The temperature control system according to claim 3, wherein after the output control unit has output the heater firing instruction to the element corresponding to the selected heater having the largest accumulated output error, the smallest interference heater selection unit selects a heater having the smallest interference operation amount from among heaters in the same row or column as the heater having the largest accumulated output error.

5. The temperature control system according to any of claims 2 to 4, wherein the interference operation amount calculation unit calculates the interference operation amount based on a maximum heater current that flows at the time of turning on an element corresponding to any of the plurality of heaters, target heater current of each of the plurality of heaters, and each heater current calculated by using the relation information of the heaters.

6. The temperature control system according to any of claims 1 to 5, wherein the output error accumulation unit is adapted to calculate the output error and to accumulate the calculated output errors at least at every half cycle of the power source.

7. A method for driving of a plurality of heaters for controlling a temperature of a control target, the plurality of heaters arranged on the control target in a plurality of rows and columns, heaters of the same row being connected to a common wiring and heaters of the same column being connected to a common wiring, wirings of the rows being connected to the side of one pole of a power source via respective elements that respond to a heater firing instruction, and wirings of the columns being connected to the side of the other pole of the power source via respective elements that respond to a heater firing instruction, the method comprising:

inputting an operation amount for controlling a temperature of the control target;
calculating, for each heater, an output error based on the operation amount input and a threshold that has been set in advance for allowing driving of the heater based on the operation amount input, and also accumulating calculated output errors;
determining whether the accumulated output error is equal to or larger than the threshold;
outputting a heater firing instruction to a corresponding element based on a determination result; and
updating the accumulated output error by subtracting from the updated accumulated output error, an interference operation amount to which the respective heater is subjected due to current flowing through other heaters via the wirings of the heaters.

8. The method according to claim 7, further comprising:

calculating the interference operation amount using relation information indicating an extent of interference to which each heater is subjected due to current flowing through other heaters via the wirings of the heaters.

9. The method according to claim 8, further comprising:

selecting a heater having a largest accumulated output error;
selecting a heater having a smallest interference operation amount;
determining with respect to the selected heater having the largest accumulated output error whether the accumulated output error is equal to or larger than the threshold, and if the accumulated output error is determined to be equal to or larger than the threshold, further determining whether power consumption of the selected heater is smaller than a power limit, and if the power consumption is determined to be smaller than the power limit, outputting a heater firing instruction to an element corresponding to the selected heater; and
determining with respect to the selected heater having the smallest interference operation amount whether the accumulated output error is equal to or larger than the threshold, and if the accumulated output error is determined to be equal to or larger than the threshold, further determining whether power consumption of the selected heater is smaller than the power limit, and if the power consumption is determined to be smaller than the power limit, repeatedly performing, with respect to heaters that have not been selected at the time of this determination, the operation performed on the selected heater having the smallest interference operation amount, and outputting a heater firing instruction to an element corresponding to a heater selected as a result of the repeatedly performed operation.

10. The method according to claim 9, further comprising:

selecting a heater having the smallest interference operation amount from among heaters in the same row or column as the heater having the largest accumulated output error after outputting the heater firing instruction to the element corresponding to the selected heater having the largest accumulated output error.

11. The method according to any of claims 8 to 10, wherein further comprising: calculating the interference operation amount based on a maximum heater current that flows at the time of turning on an element corresponding to any of the plurality of heaters, target heater current of each of the plurality of heaters, and each heater current calculated by using the relation information of the heaters.

12. The method according to any of claims 7 to 11, wherein calculating the output error and accumulating the calculated output errors is performed at least every half cycle of the power source.

FIG. 1

FIG. 2

## FIG. 3

Start

Initialization | ST1

n=n+1 | ST2

Input on-ratio MVj,j(n) | ST3

Calculate accumulated output error | ST4
$$\Sigma\, i,j(n)= \Sigma\, i,j(n-1)+MVi,j(n)$$

Output/threshold comparison | ST5
$$\Sigma\, i,j(n)\geqq S$$

N

Y

Output firing pulse | ST6
$$Yi,j(n)=100\%$$

No firing pulse | ST7
$$Yi,j(n)=0\%$$

Output error | ST8
$$Ei,j(n)=MVi,j(n)-Yi,j(n)$$

Update accumulated output error | ST9
$$\Sigma\, i,j(n)= \Sigma\, i,j(n-1)+Ei,j(n)-MVIi,j(n)$$

FIG. 4

(a)    $IMAX_{i,j} = 100V/100\Omega = 1A$

(b)    $I_{i,j}$

| 8-11 | 8-12 | 8-13 |
|------|------|------|
| 1.0 | 0.4 | 0.4 |
| 0.4 | 0.2 | 0.2 |
| 0.4 | 0.2 | 0.2 |

8-21, 8-22, 8-23, 8-31, 8-32, 8-33

(c)    $IEXP_{i,j}$

| 1.0 | 0 | 0 |
|-----|---|---|
| 0 | 0 | 0 |
| 0 | 0 | 0 |

(d)    $MVI_{i,j}$

| 0 | 0.4 | 0.4 |
|---|-----|-----|
| 0.4 | 0.2 | 0.2 |
| 0.4 | 0.2 | 0.2 |

FIG. 5

(a)     IMAXi, j＝100V/100Ω＝1A

(b)     Ii, j

8-11

| 1.0 | 1.0 | 0.25 |
| 0.25 | 0.25 | 0.5 |
| 1.0 | 1.0 | 0.25 |

8-32

(c)     IEXPi, j

| 1.0 | 0 | 0 |
| 0 | 0 | 0 |
| 0 | 1.0 | 0 |

(d)     MVIi, j

| 0 | 1.0 | 0.25 |
| 0.25 | 0.25 | 0.5 |
| 1.0 | 0 | 0.25 |

FIG. 6

Start

ST10  n=n+1

ST11  Initialize output $Y_{i,j}(n)=0\%$

ST12  Input on-ratio $MV_{j,j}(n)$

ST13  Calculate accumulated output error $\Sigma_{i,j}(n)=\Sigma_{i,j}(n-1)+MV_{i,j}(n)$

ST14  Select heater $H_{x,y}$ having largest accumulated output error

ST15  Output/threshold comparison $\Sigma_{i,j}(n)\geqq S$
  Y / N

ST16  Power consumption < Power limit
  Y / N

ST17  Calculate for each heater sum of interference operation amount upon turning on

$\Sigma MV_{i,j}=0$

$i=1\sim Row$
$j=1\sim Col$

$k=1\sim Row$
$m=1\sim Col$

$\Sigma MV_{i,j}=$
$\Sigma MV_{i,j}+MV_{k,m}$

ST18  Additionally select heater $H_{i,j}$ having min($\Sigma MV_{i,j}$)

ST19  Output/threshold comparison

ST20  Remove last-selected heater from output target heaters

ST21  Output firing pulse to selected heaters $Y_{xs,ys}(n)=100\%$

ST22  Output error $E_{i,j}(n)=MV_{i,j}(n)-Y_{i,j}(n)$

ST23  Update accumulated output error $\Sigma_{i,j}(n)=\Sigma_{i,j}(n-1)+E_{i,j}(n)-MV_{i,j}(n)$

End

15

FIG. 7

FIG. 8

Start

$n=n+1$ **ST10**

Initialize output **ST11**
$Yi,j(n)=0\%$

Input on-ratio $MVj,j(n)$ **ST12**

Calculate accumulated output error **ST13**
$\Sigma\, i,j(n)=\Sigma\, i,j(n-1)+MVi,j(n)$

Select heater $Hx,y$ having largest accumulated output error **ST14**

Output/threshold comparison
$\Sigma\, i,j(n)\geqslant S$ **ST15**
N / Y

Select heater having largest accumulated output error from among heaters in the same row and column

Power consumption < Power limit **ST16**
N / Y

Select heater having largest accumulated output error from among heaters in row x and column y

$\max(\Sigma\, x,j\,,\,\Sigma\, i,y)$ **ST25**
where $i=1\sim$Row
$j=1\sim$Col

Output/threshold comparison **ST26**
N / Y

Firing pulse output **ST27**

Remove last-selected heater from output target heaters **ST20**

Output firing pulse to selected heaters **ST21**
$Yxs,ys(n)=100\%$

Output error **ST22**
$Ei,j(n)=MVi,j(n)-Yi,j(n)$

Update accumulated output error **ST23**
$\Sigma\, i,j(n)=\Sigma\, i,j(n-1)+Ei,j(n)MVIi,j(n)$

End

EP 2 365 728 A1

Europäisches
Patentamt

European
Patent Office

Office européen
des brevets

**EUROPEAN SEARCH REPORT**

Application Number

EP 11 15 3528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 303 168 A1 (WHIRLPOOL CO [US]) 16 April 2003 (2003-04-16) * abstract * * paragraphs [0009] - [0013] * * figure 5 * ----- | 1-12 | INV. H05B3/74 |
| A | EP 1 439 739 A1 (WHIRLPOOL CO [US]) 21 July 2004 (2004-07-21) * abstract * * paragraphs [0010] - [0012] * * figures 1,2 * ----- | 1-12 | |
| A | DE 100 33 361 A1 (WARTMANN THOMAS [DE]) 24 January 2002 (2002-01-24) * abstract * * figures 1-4 * * paragraphs [0019] - [0029] * ----- | 1-12 | |

| | TECHNICAL FIELDS SEARCHED (IPC) |
|---|---|
| | H05B |

The present search report has been drawn up for all claims

| Place of search | Date of completion of the search | Examiner |
|---|---|---|
| Munich | 24 June 2011 | de la Tassa Laforgue |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 15 3528

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2011

| Patent document cited in search report | | | Publication date | Patent family member(s) | | Publication date |
|---|---|---|---|---|---|---|
| EP 1303168 | A1 | | 16-04-2003 | NONE | | |
| EP 1439739 | A1 | | 21-07-2004 | ES | 2335981 T3 | 07-04-2010 |
| | | | | JP | 4343716 B2 | 14-10-2009 |
| | | | | JP | 2004340563 A | 02-12-2004 |
| | | | | NZ | 530087 A | 24-09-2004 |
| | | | | US | 2004144769 A1 | 29-07-2004 |
| DE 10033361 | A1 | | 24-01-2002 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008332717 A

- JP 2001274069 A